# EUROPÄISCHE PATENTSCHRIFT

(11) **EP 4 294 318 B1**
(45) Veröffentlichungstag und Bekanntmachung des Hinweises auf die Patenterteilung: **30.07.2025**
(21) Anmeldenummer: 22730745.1
(22) Anmeldetag: 20.05.2022
(51) Int. Cl.: A61C 15/02, A46B 3/00

(54) **INTERDENTAL-REINIGER**
INTERDENTAL CLEANER
DISPOSITIF DE NETTOYAGE INTERDENTAIRE

(30) Priorität: 21.05.2021 DE 102021113332
(43) Veröffentlichungstag der Anmeldung: 27.12.2023
(73) Patentinhaber: Interbros GmbH, 79677 Schönau (DE)
(72) Erfinder: BUTZ, Jürgen, 79694 Utzenfeld (DE)
(74) Vertreter: Lichti - Patentanwälte Partnerschaft mbB
(86) Internationale Anmeldenummer: PCT/EP2022/063704
(87) Internationale Veröffentlichungsnummer: WO 2022/243505

(56) Entgegenhaltungen:
- EP-A1- 3 219 291
- DE-A1- 102018 008 963
- US-A1- 2015 257 861
- US-B2- 10 898 303

## Beschreibung

Die Erfindung betrifft einen Interdental-Reiniger mit einem stabförmigen Träger aus einem ersten Kunststoff, der in seinem hinteren Endbereich ein Griffteil aufweist und in seinem entgegengesetzten vorderen Endbereich einen Überzug aus einem weich-elastischen zweiten Kunststoff trägt, wobei auf der Außenseite des Überzugs mehrere radial hervorstehende Finger angeordnet sind, die in ihrem Fußbereich einstückig mit dem Überzug verbunden sind.

Zur Reinigung der Zahnzwischenräume werden Interdental-Reiniger aus Kunststoff verwendet, die einen stabförmigen Träger aus einem ersten Kunststoff aufweisen, der an seinem hinteren Ende ein üblicherweise plattenförmiges, einstückig angeformtes Griffteil besitzt. Am vorderen Ende des Trägers ist ein hülsenförmiger Überzug aus einem weich-elastischen zweiten

Kunststoff, beispielsweise einem thermoplastischen Elastomer oder Silikon aufgespritzt. Um die Reinigungswirkung zu verbessern, besitzt der Überzug auf seiner Außenseite radial oder zumindest mit radialer Komponente hervorstehende Finger, die aus dem gleichen Material wie der Überzug bestehen und einstückig mit diesem ausgebildet und verbunden sind. Die Finger müssen einerseits eine ausreichende Stabilität aufweisen, um bei Gebrauch des Interdental-Reinigers nicht abzureißen oder zu knicken. Andererseits müssen die Finger sich leicht verformen lassen, um in sehr enge Spalte oder Zahnzwischenräume eindringen zu können und diese zu säubern.

EP 3 219 291 A1 offenbart einen Interdental-Reiniger mit einem stabförmigen Träger aus einem ersten Kunststoff, der an seinem hinteren Endbereich ein Griffteil aufweist und in seinem entgegengesetzten vorderen Endbereich einen Überzug aus einem weich-elastischen zweiten Kunststoff trägt,wobei auf der Außenseite des Überzugs mehrere radial hervorstehende Finger angeordnet sind,die in ihrem Fußbereich einstückig mit dem Überzug verbunden sind,wobei der Überzug an seinem dem Griffteil abgewandten vorderen Ende des Interdentalreinigers einen Spitzenbereich mit einer Länge im Bereich von 0,5 mm und mehr.

US 2015/257861 A1 offenbart, dass die Finger des InterdentalReinigers unterschiedliche Schlankheiten haben, wobei die Finger im hinteren Bereich eine größere Schlankheit haben können, als die Finger im vorderen Bereich des Überzugs.

Es ist bekannt, dass die Reinigungswirkung des Interdentalreinigers verbessert werden kann, wenn die Finger möglichst schlank sind. In der DE 10 2018 008 963 A1 ist ein Interdental-Reiniger der genannten Art beschrieben, der relativ schlanke Finger besitzt, wobei die Schlankheit S sich aus den Quotienten der axialen Länge 1 des Fingers und dessen maximalen Durchmesser im Fußbereich ergibt (S = l/d). Jedoch ist die Reinigungswirkung des Interdentalreinigers von den geometrischen Verhältnissen an den zu reinigenden Zahnzwischenräumen abhängig, so dass nicht für alle Benutzer ein Interdental-Reiniger mit Fingern einer vorgegebenen Schlankheit zwangsläufig zu guten Reinigungsergebnissen führt.

Der Erfindung liegt die Aufgabe zugrunde, ein Interdental-Reiniger der genannten Art zu schaffen, bei dem die Finger eine verbesserte Reinigungswirkung aufweisen.

Diese Aufgabe wird erfindungsgemäß durch einen Interdental-Reiniger mit den Merkmalen des Anspruchs 1 gelöst. Dabei wird erfindungsgemäß von der Grundüberlegung ausgegangen, die Schlankheit der Finger des Interdentalreinigers in unterschiedlichen definierten Bereichen voneinander abweichen zu lassen. Dazu zunächst einige Definitionen:
Der Überzug besitzt an seinem dem Griffteil abgewandten vorderen Ende des Interdentalreinigers einen Spitzenbereich SB mit einer Länge im Bereich von 0,5 mm bis 2,0 mm und vorzugsweise im Bereich von 1,0 mm bis 1,5 mm. Vorzugsweise besitzt der Spitzenbereich SB eine Länge von 1,5 mm. Dieser Spitzenbereich SB bleibt bei der folgenden Betrachtung der Schlankheit der Finger außer Betracht, da im Spitzenbereich SB bei manchen Interdental-Reinigern Finger anderer geometrischer Ausgestaltung und insbesondere Stummelfinger vorgesehen sind.

Der Überzug besitzt ferner einen Funktionsbereich FB, der sich an den Spitzenbereich SB in Richtung des Griffteils anschießt und sich bis zu einem dem Griffteil nächstliegenden hinteren Finger erstreckt. Der Funktionsbereich FB ist in einen an den Spitzenbereich SB unmittelbar anschließenden vorderen Bereich VB mit einer Länge im Bereich von 1,0 mm bis 2,5 mm und insbesondere im Bereich von 1,5 mm bis 2,0 mm, einen sich von dem hinteren Finger nach vorne erstreckenden hinteren Bereich HB mit einer Länge im Bereich von 1,0 mm bis 2,5 mm und insbesondere im Bereich von 1,5 mm bis 2,0 mm und einen zwischen dem vorderen Bereich VB und dem hinteren Bereich HB angeordneten mittleren Bereich MB unterteilt. Zum Vergleich der Schlankheit der Finger werden vorzugsweise der vordere Bereich VB und der hintere Bereich HB betrachtet und miteinander verglichen. Vorzugsweise besitzen der vordere Bereich VB und/oder der hintere Bereich HB eine Länge von 2,0 mm.

Es ist bekannt, dass sowohl die Flexibilität als auch die Stabilität der Finger wesentlich von deren Schlankheit abhängen. Der Überzug und die Finger werden in einem gemeinsamen Spritzguss-Schritt in einer Spritzguss-Form hergestellt und weisen eine sich radial nach außen, d.h. zur Spitze der Finger verjüngende Form insbesondere in Form eines Kreis-Kegels auf, um die Finger nach dem Spritzvorgang in einfacher Weise entformen zu können. Um Verletzungen am Zahnfleisch des Benutzers zu vermeiden, sind die Finger an ihrem radial äußeren Ende in der Regel abgerundet.

Üblicherweise besitzen die Finger jeweils die Form eines Kreis-Kegels, jedoch sind auch Kegel mit anderen Querschnittsformen, beispielsweise einem Ellipsen-Kegel, einem Rechteck- oder Quadrat-Kegel (Pyramide) oder einem Vieleck- oder n-Eck-Kegel möglich. Im Folgenden wird beispielhaft von einem Kreis-Kegel ausgegangen, jedoch ist die Erfindung darauf nicht beschränkt.

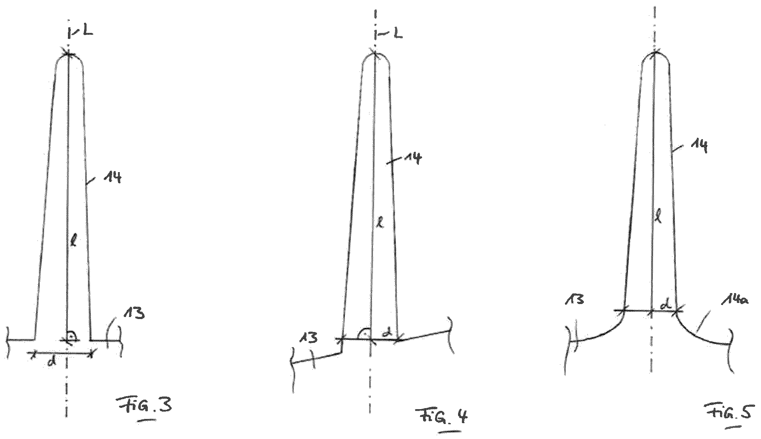

Die Schlankheit S ist definiert als der Quotient aus der axialen Länge l des Fingers und dessen maximalen Durchmesser d im Fußbereich (S = l/d). Der für die Ermittlung des maximalen Durchmessers d maßgebliche Querschnitt des Fingers ist derjenige Querschnitt, der gerade noch vollständig innerhalb des Fingers liegt, d.h. nicht in den Überzug hineinragt. Wenn die Längsmittelachse L des Fingers sich senkrecht zur Oberfläche des Überzugs erstreckt, wie es in Fig. 3 dargestellt ist, ist der für die Ermittlung des Durchmessers d maßgebliche Querschnitt der der Oberfläche des Überzugs zugewandten Querschnitt des Fingers. Die axiale Länge l des Fingers ergibt sich dann aus der Entfernung des maßgeblichen Querschnitts zu dem radial außenliegenden Ende des Fingers.

Wenn die Längsmittelachse L des Fingers nicht senkrecht zur Oberfläche des Überzugs verläuft, ist der für den maximalen Durchmesser d maßgebliche Querschnitt derjenige Querschnitt, der vollständig innerhalb des Fingers liegt (siehe Fig. 4). Die axiale Länge 1 des Fingers ergibt sich dann aus dem Abstand des maßgeblichen Querschnitts zur Spitze des Fingers.

Wenn der Finger über einen ausgerundeten Abschnitt in den Überzug übergeht, ist der maßgebliche Querschnitt zur Ermittlung des maximalen Durchmessers d der untere, dem Überzug zugewandte Querschnitt der reinen Kegelform des Fingers, d.h. der ausgerundete Übergangsquerschnitt bleibt außer Betracht, wie es in Fig. 5 dargestellt ist. Auch hierbei ergibt sich die axiale Länge 1 des Fingers aus dem Abstand des maßgeblichen Querschnitts zu der radial außen liegenden Spitze des Fingers.

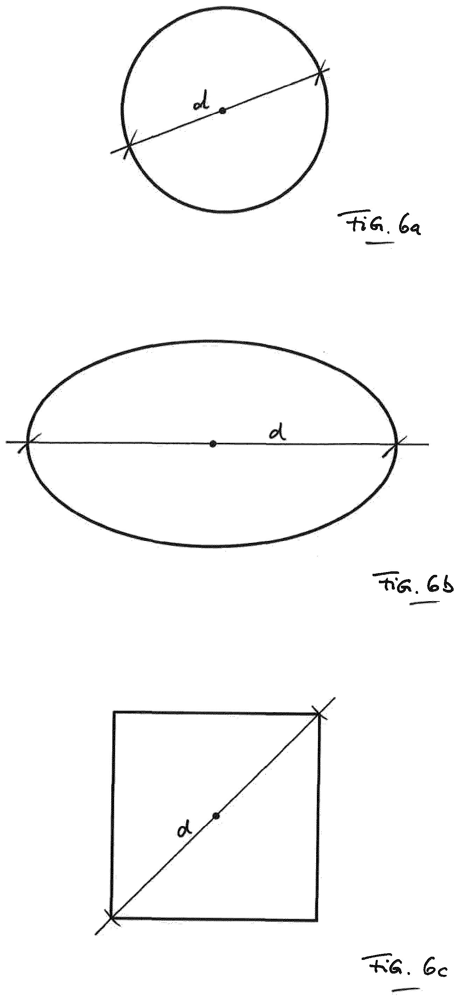

Wenn der Finger die Form eines Kreis-Kegels hat, besitzt auch der maßgebliche Querschnitt des Fingers im Fußbereich die Form eines Kreises und der Durchmesser d ergibt sich aus dem Durchmesser des Kreises an beliebiger Stelle (siehe Fig. 6a).

Wenn der Finger die Form eines Ellipsen-Kegels hat, ist der maßgebliche Durchmesser d der Durchmesser auf der längeren Hauptachse der Ellipse (siehe Fig. 6b).

Wenn der Querschnitt des Fingers ein Quadrat, ein Rechteck oder ein vorzugsweise gleichmäßiges Vieleck ist, ergibt sich der maßgebliche Durchmesser d aus dem maximalen Abstand zweier gegenüberliegender Eckpunkte (siehe Fig. 6c).

Die Erfindung geht von der Grundüberlegung aus, in dem vorderen Bereich VB einen oder mehrere Finger vorzusehen, die eine geringere Schlankheit (vordere Schlankheit S_{V}) als einer oder mehrere Finger in dem hinteren Bereich HB (hintere Schlankheit S_{H}) aufweisen.

Grundsätzlich ist vorgesehen, dass in dem vorderen Bereich VB zumindest einer der Finger oder zumindest 50% aller dortigen Finger oder zumindest 80% aller dortigen Finger oder sogar alle dortigen Finger eine vordere Schlankheit Sᵥ von zumindest 3,0 aufweisen.

Auch für den hinteren Bereich HB ist vorgesehen, dass in dem hinteren Bereich HB zumindest einer der Finger oder zumindest 50% aller dortigen Finger oder zumindest 80% aller dortigen Finger oder sogar alle dortigen Finger eine hintere Schlankheit S_{H} von zumindest 3,0 aufweisen.

Der Unterschied in den Schlankheiten der Finger zwischen dem vorderen Bereich VB und dem hinteren Bereich HB besteht darin, dass die vordere Schlankheit S_{V} zumindest eines der Finger, die in dem vorderen Bereich VB des Überzugs angeordnet sind, oder die vordere Schlankheit S_{V} zumindest 50% aller dortigen Finger oder die vordere Schlankheit S_{V} zumindest 80% aller dortigen Finger oder die vordere Schlankheit S_{V} aller dortigen Finger geringer als die hintere Schlankheit S_{H} zumindest einer der Finger, die in dem hinteren Bereich HB des Überzugs angeordnet sind, oder als die hintere Schlankheit S_{H} zumindest 50% aller dortigen Finger oder als die hintere Schlankheit S_{H} zumindest 80% aller dortigen Finger oder als die hintere Schlankheit S_{H} aller dortigen Finger ist.

Vorzugsweise ist die vordere Schlankheit S_{V} um 3% bis 15% und insbesondere um 5% bis 10% geringer als die hintere Schlankheit S_{H}.

In bevorzugter Ausgestaltung der Erfindung kann vorgesehen sein, dass die vordere Schlankheit S_{V} im Bereich von 3,0 bis 5,0 und insbesondere im Bereich von 3,5 bis 4,7 liegt.

Alternativ oder zusätzlich dazu kann vorgesehen sein, dass die hintere Schlankheit S_{H} im Bereich von 3,5 bis 5,5 und insbesondere im Bereich von 3,9 bis 5,1 liegt.

In Weiterbildung der Erfindung kann vorgesehen sein, dass der maximale Durchmesser im Fußbereich derjenigen Finger, die in dem vorderen Bereich VB des Überzugs angeordnet sind, um 5% bis 15% geringer als der maximale Durchmesser d_{H} im Fußbereich derjenigen Finger ist, die in dem hinteren Bereich HB des Überzugs angeordnet sind.

Zusätzlich oder alternativ dazu kann vorgesehen sein, dass die axiale Länge l_{V} derjenigen Finger, die in dem vorderen Bereich VB des Überzugs angeordnet sind, um 5% bis 15% geringer als die axiale Länge l_{H} derjenigen Finger ist, die in dem hinteren Bereich HB des Überzugs angeordnet sind.

Der Interdental-Reiniger kann neben den Fingern mit der genannten Schlankheit auch Finger anderer Form und/oder Schlankheit aufweisen.

Weitere Einzelheiten und Merkmale der Erfindung ergeben sich aus der folgenden Beschreibung eines Ausführungsbeispiels. Es zeigen:
- Fig. 1: eine perspektivische Ansicht eines Interdentalreinigers,
- Fig. 2: einen schematischen Längsschnitt durch den vorderen Bereich des Interdentalreinigers mit dem Überzug und den Fingern,
- Fig. 3: eine erste geometrische Ausgestaltung eines Fingers,
- Fig. 4: eine zweite geometrische Ausgestaltung eines Fingers,
- Fig. 5: eine dritte geometrische Ausgestaltung eines Fingers und
- Fig. 6a, 6b, 6c: mögliche Querschnittsformen eines Fingers.

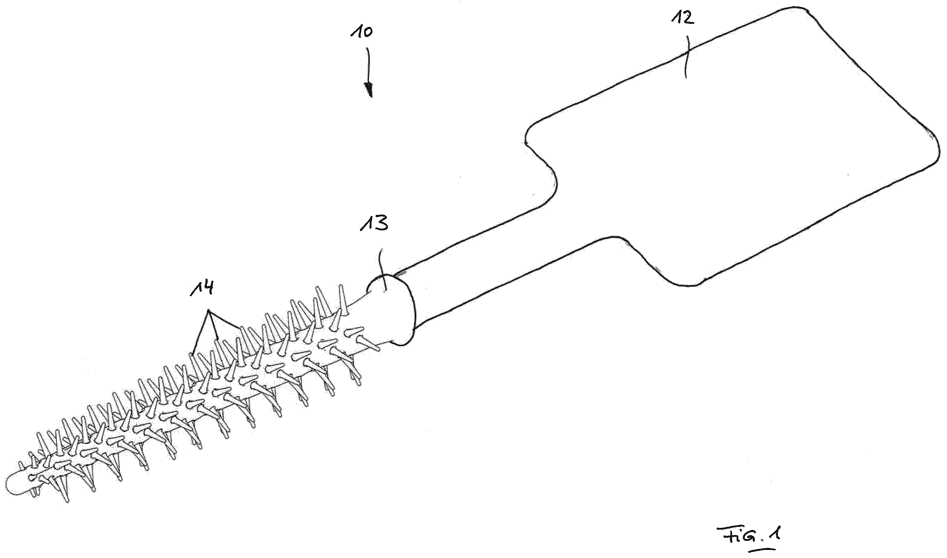

Ein in Fig. 1 dargestellter Interdentalreiniger 10 besitzt einen stabförmigen Träger 11 aus einem formstabilen 1. Kunststoff, der an seinem hinteren, gemäß Fig. 1 rechten Ende ein einstückig angeformtes, plattenförmiges Griffteil 12 aufweist, an dem ein Benutzer den Interdentalreiniger 10 erfassen kann.

In seinem entgegengesetzten vorderen Endbereich trägt der Träger 11 einen hülsenförmigen Überzug 13 aus einem weichelastischem 2. Kunstsoff-Material, beispielsweise einem thermoplastischen Elastomer oder Silikon. Auf der Außenoberfläche des Überzugs 13 sind mehrere radial nach außen hervorstehende Finger 14 einstückig angeformt, die aus dem gleichen Material wie der Überzug 13 bestehen und monolithisch mit diesem verbunden sind. Die Finger 14 besitzen die Form eines Kegels, vorzugsweise eines Kreis-Kegels mit sich radial nach außen verjüngendem Querschnitt und sind an ihrem radial äußeren Ende abgerundet.

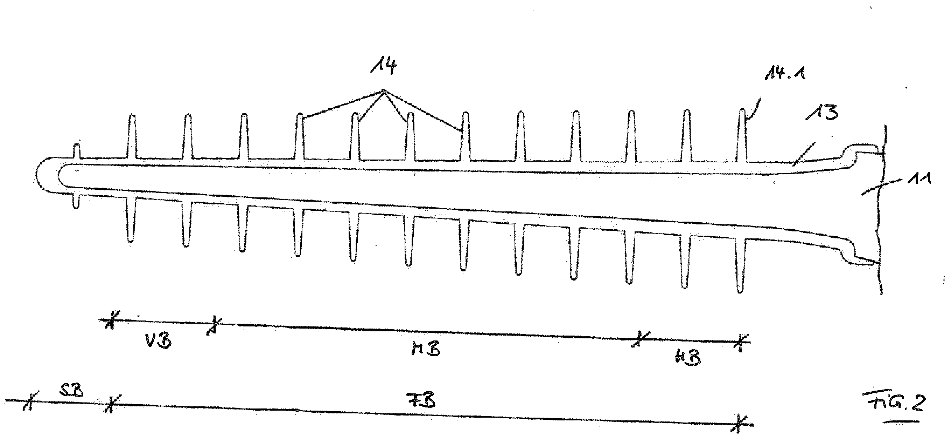

Fig. 2 zeigt einen schematischen Längsschnitt durch den vorderen Bereich des Trägers 11, den Überzug 13 und die Finger 14. Der Überzug 13 ist in einen vorderen Spitzenbereich SB mit einer Länge im Bereich von 0,5 mm bis 2,0 mm und vorzugsweise im Bereich von 1,0 mm bis 1,5 mm und einen Funktionsbereich FB unterteilt, der sich an den Spitzenbereich SB in Richtung des Griffteils 12 anschließt und sich bis zu einem dem Griffteil 14 nächstliegenden hinteren Finger 14.1 erstreckt. Der Funktionsbereich FB ist in einen an dem Spitzenbereich SB unmittelbar anschließenden vorderen Bereich VB mit einer Länge im Bereich von 1,0 mm bis 2,5 mm und insbesondere im Bereich von 1,5 mm bis 2,0 mm, einen sich von dem hinteren Finger 14.1 nach vorne erstreckenden hinteren Bereich HB mit einer Länge im Bereich von 1,0 mm bis 2,5 mm und insbesondere im Bereich von 1,5 mm bis 2,0 mm und einen zwischen dem vorderen Bereich VB und dem hinteren Bereich HB angeordneten mittleren Bereich MB unterteilt.

Die Schlankheit S eines Fingers 14 ist definiert als der Quotient aus der axialen Länge 1 des Fingers 14 und dessen maximalen Durchmesser d im Fußbereich (S = l/d). Der für die Ermittlung des maximalen Durchmessers d maßgebliche Querschnitt des Fingers 14 ist derjenige Querschnitt, der gerade noch vollständig innerhalb des Fingers 14 liegt, d.h. nicht in den Überzug 13 hineinragt. Wenn die Längsmittelachse L des Fingers 14 sich senkrecht zur Oberfläche des Überzugs 13 erstreckt, wie es in Fig. 3 dargestellt ist, ist der für die Ermittlung des Durchmessers d maßgebliche Querschnitt der der Oberfläche des Überzugs 13 zugewandten Querschnitt des Fingers 14. Die axiale Länge 1 des Fingers 14 ergibt sich dann aus der Entfernung des maßgeblichen Querschnitts zu dem radial außenliegenden Ende des Fingers 14.

Wenn die Längsmittelachse L des Fingers 14 nicht senkrecht zur Oberfläche des Überzugs 13 verläuft, ist der für den maximalen Durchmesser d maßgebliche Querschnitt derjenige Querschnitt, der vollständig innerhalb des Fingers 14 liegt (siehe Fig. 4). Die axiale Länge 1 des Fingers 14 ergibt sich dann aus dem Abstand des maßgeblichen Querschnitts zur Spitze des Fingers 14.

Wenn der Finger 14 über einen ausgerundeten, im Querschnitt erweiterten Abschnitt 14a in den Überzug 13 übergeht, ist der maßgebliche Querschnitt zur Ermittlung des maximalen Durchmessers d der untere, dem Überzug 13 zugewandte Querschnitt der reinen Kegelform des Fingers 14, d.h. der ausgerundete Übergangsquerschnitt bleibt außer Betracht, wie es in Fig. 5 dargestellt ist. Auch hierbei ergibt sich die axiale Länge 1 des Fingers 14 aus dem Abstand des maßgeblichen Querschnitts zu der radial außen liegenden Spitze des Fingers 14.

Wenn der Finger 14 die Form eines Kreis-Kegels hat, besitzt der maßgebliche Querschnitt des Fingers 14 im Fußbereich die Form eines Kreises und der Durchmesser d ergibt sich aus dem Durchmesser des Kreises an beliebiger Stelle, wie es in Fig. 6a dargestellt ist.

Wenn der Finger 14 die Form eines Ellipsen-Kegels hat, ist der maßgebliche Durchmesser d der Durchmesser auf der längeren Hauptachse der Ellipse, wie es in Fig. 6b dargestellt ist.

Wenn der Querschnitt des Fingers 14 ein Quadrat, ein Rechteck oder ein vorzugsweise gleichmäßiges Vieleck ist, ergibt sich der maßgebliche Durchmesser d aus dem maximalen Abstand zweier gegenüberliegender Eckpunkte, wie es in Fig. 6c dargestellt ist.

Die Erfindung geht von der Grundüberlegung aus, in dem vorderen Bereich VB einen oder mehrere Finger 14 vorzusehen, die eine geringere Schlankheit (vordere Schlankheit S_{V}) als einer oder mehrere Finger 14, 14.1 in dem hinteren Bereich HB (hintere Schlankheit S_{H}) aufweisen.

Grundsätzlich ist vorgesehen, dass in dem vorderen Bereich VB zumindest einer der Finger 14 oder zumindest 50% aller dortigen Finger 14 oder zumindest 80% aller dortigen Finger 14 oder sogar alle dortigen Finger 14 eine vordere Schlankheit Sᵥ von zumindest 3,0 aufweisen.

Auch für den hinteren Bereich HB ist vorgesehen, dass in dem hinteren Bereich HB zumindest einer der Finger 14 oder zumindest 50% aller dortigen Finger 14 oder zumindest 80% aller dortigen Finger 14 oder sogar alle dortigen Finger 14 eine hintere Schlankheit S_{H} von zumindest 3,0 aufweisen.

Der Unterschied in den Schlankheiten der Finger 14 zwischen dem vorderen Bereich VB und dem hinteren Bereich HB besteht darin, dass die vordere Schlankheit S_{V} zumindest eines der Finger 14, die in dem vorderen Bereich VB des Überzugs 13 angeordnet sind, oder die vordere Schlankheit S_{V} zumindest 50% aller dortigen Finger 14 oder die vordere Schlankheit S_{V} zumindest 80% aller dortigen Finger 14 oder die vordere Schlankheit S_{V} aller dortigen Finger 14 geringer als die hintere Schlankheit S_{H} zumindest einer der Finger 14, die in dem hinteren Bereich HB des Überzugs 13 angeordnet sind, oder als die hintere Schlankheit S_{H} zumindest 50% aller dortigen Finger 14 oder als die hintere Schlankheit S_{H} zumindest 80% aller dortigen Finger 14 oder als die hintere Schlankheit S_{H} aller dortigen Finger 14 ist.

Vorzugsweise ist die vordere Schlankheit S_{V} um 3% bis 15% und insbesondere um 5% bis 10% geringer als die hintere Schlankheit S_{H}.

In bevorzugter Ausgestaltung der Erfindung kann vorgesehen sein, dass die vordere Schlankheit S_{V} im Bereich von 3,0 bis 5,0 und insbesondere im Bereich von 3,5 bis 4,7 liegt.

Alternativ oder zusätzlich dazu kann vorgesehen sein, dass die hintere Schlankheit S_{H} im Bereich von 3,5 bis 5,5 und insbesondere im Bereich von 3,9 bis 5,1 liegt.

## Patentansprüche

1. Interdental-Reiniger (10) mit einem stabförmigen Träger (11) aus einem ersten Kunststoff, der an seinem hinteren Endbereich ein Griffteil (12) aufweist und in seinem entgegengesetzten vorderen Endbereich einen Überzug (13) aus einem weich-elastischen zweiten Kunststoff trägt,
wobei auf der Außenseite des Überzugs (13) mehrere radial hervorstehende Finger (14) angeordnet sind, die in ihrem Fußbereich einstückig mit dem Überzug (13) verbunden sind,
wobei der Überzug (13) an seinem dem Griffteil (12) abgewandten vorderen Ende des Interdentalreinigers einen Spitzenbereich (SB) mit einer Länge im Bereich von 0,5 mm bis 2,0 mm und vorzugsweise im Bereich von 1,0 mm bis 1,5 mm und einen Funktionsbereich (FB) aufweist, der sich an den Spitzenbereich (SB) in Richtung des Griffteils (12) anschließt und sich bis zu einem dem Griffteil (14) nächstliegenden hinteren Finger (14.1) erstreckt,
wobei der Funktionsbereich (FB) in einen an den Spitzenbereich (SB) unmittelbar anschließenden vorderen Bereich (VB) mit einer Länge im Bereich von 1,0 mm bis 2,5 mm und insbesondere im Bereich von 1,5 mm bis 2,0 mm, einen sich von dem hinteren Finger (14.1) nach vorne erstreckenden hinteren Bereich (HB) mit einer Länge im Bereich von 1,0 mm bis 2,5 mm und insbesondere im Bereich von 1,5 mm bis 2,0 mm und einen zwischen dem vorderen Bereich (VB) und dem hinteren Bereich (HB) angeordneten mittleren Bereich (MB) unterteilt ist,
wobei in dem vorderen Bereich (VB) zumindest einer der Finger (14) oder zumindest 50% aller dortigen Finger (14) oder zumindest 80% aller dortigen Finger (14) oder alle dortigen Finger (14) eine vordere Schlankheit (Sᵥ) von zumindest 3,0 aufweisen,
wobei in dem hinteren Bereich (HB) zumindest einer der Finger (14) oder zumindest 50% aller dortigen Finger (14) oder zumindest 80% aller dortigen Finger (14) oder alle dortigen Finger (14) eine hintere Schlankheit (S_{H}) von zumindest 3,0 aufweisen,
wobei die Schlankheit (Sᵢ) sich aus dem Quotienten der axialen Länge (1) des Fingers (14) und dessen maximalem Durchmesser (d) im Fußbereich ergibt (Sᵢ = l/d),
wobei die vordere Schlankheit (S_{V}) zumindest eines der Finger (14), die in dem vorderen Bereich (VB) des Überzugs (13) angeordnet sind, oder die vordere Schlankheit (S_{V}) zumindest 50% aller dortigen Finger (14) oder die vordere Schlankheit (S_{V}) zumindest 80% aller dortigen Finger (14) oder die vordere Schlankheit (S_{V}) aller dortigen Finger (14) geringer als die hintere Schlankheit (S_{H}) zumindest eines der Finger (14), die in dem hinteren Bereich (HB) des Überzugs (13) angeordnet sind, oder als die hintere Schlankheit (S_{H}) zumindest 50% aller dortigen Finger (14) oder als die hintere Schlankheit (S_{H}) zumindest 80% aller dortigen Finger (14) oder als die hintere Schlankheit (S_{H}) aller dortigen Finger (14) ist.

2. Interdental-Reiniger nach Anspruch 1, **dadurch gekennzeichnet, dass** die vordere Schlankheit (S_{V}) um 3% bis 15% geringer als die hintere Schlankheit (S_{H}) ist.

3. Interdental-Reiniger nach Anspruch 2, **dadurch gekennzeichnet, dass** die vordere Schlankheit (S_{V}) um 5% bis 10% geringer als die hintere Schlankheit (S_{H}) ist.

4. Interdental-Reiniger nach einem der Ansprüche 1 bis 3, **dadurch gekennzeichnet, dass** die vordere Schlankheit (S_{V}) im Bereich von 3,0 bis 5,0 liegt.

5. Interdental-Reiniger nach Anspruch 4, **dadurch gekennzeichnet, dass** die vordere Schlankheit (S_{V}) im Bereich von 3,5 bis 4,7 liegt.

6. Interdental-Reiniger nach einem der Ansprüche 1 bis 5, **dadurch gekennzeichnet, dass** die hintere Schlankheit (S_{H}) im Bereich von 3,5 bis 5,5 liegt.

7. Interdental-Reiniger nach Anspruch 6, **dadurch gekennzeichnet, dass** die hintere Schlankheit (S_{H}) im Bereich von 3,9 bis 5,1 liegt.

8. Interdental-Reiniger nach einem der Ansprüche 1 bis 7, **dadurch gekennzeichnet, dass** der maximale Durchmesser (d_{V}) im Fußbereich derjenigen Finger (14), die in dem vorderen Bereich (VB) des Überzugs (13) angeordnet sind, um 5% bis 15% geringer als der maximale Durchmesser (d_{H}) im Fußbereich derjenigen Finger (14) ist, die in dem hinteren Bereich (HB) des Überzugs (13) angeordnet sind.

9. Interdental-Reiniger nach einem der Ansprüche 1 bis 8, **dadurch gekennzeichnet, dass** die axiale Länge (l_{V}) derjenigen Finger (14), die in dem vorderen Bereich (VB) des Überzugs (13) angeordnet sind, um 5% bis 15% geringer als die axiale Länge (l_{H}) derjenigen Finger (14) ist, die in dem hinteren Bereich (HB) des Überzugs (13) angeordnet sind.

## Claims

1. Interdental cleaner (10) having a rod-like support (11) made of a first plastic, which has a handle part (12) at its rear end region and has a cover (13) made of a soft flexible second plastic at its opposite front end region,
wherein several radially-protruding fingers (14) are situated on the outside of the cover (13) and are integrally joined to the cover (13) in their base region,
wherein the cover (13) has a tip region (SB) having a length in the range of 0.5 mm to 2.0 mm and preferably in the range of 1.0 mm to 1.5 mm on its front end, facing away from the handle part (12), and a functional region (FB), which adjoins the tip region (SB) in the direction of the handle part (12) and extends up to a rear finger (14.1) closest to the handle part (14),
wherein the functional region (FB) is divided into a front region (VB), which is directly adjacent to the tip region (SB) and has a length in the range of 1.0 mm to 2.5 mm, and in particular in the range of 1.5 mm to 2.0 mm, a rear region (HB), which extends forwards from the rear finger (14.1) and has a length in the range of 1.0 mm to 2.5 mm, and in particular in the range of 1.5 mm to 2.0 mm, and a central region (MB), which is arranged between the front region (VB) and the rear region (HB),
wherein, in the front region (VB), at least one of the fingers (14) or at least 50% of all fingers (14) there or at least 80% of all fingers (14) there or all fingers (14) there have a front slenderness Sᵥ of at least 3.0,
wherein, in the rear region (HB), at least one of the fingers (14) or at least 50% of all fingers (14) there or at least 80% of all fingers (14) there or all fingers (14) there have a rear slenderness S_{H} of at least 3.0,
wherein the slenderness Sᵢ results from the quotients of the axial length I of the finger (14) and its maximum diameter (d) in the base region (Sᵢ = I/d),
wherein the front slenderness (Sᵥ) of at least one of the fingers (14), which are arranged in the front region (VB) of the cover (13), or the front slenderness (Sᵥ) of at least 50% of all fingers (14) there or the front slenderness (Sᵥ) of at least 80% of all fingers (14) there or the front slenderness (Sᵥ) of all fingers (14) there is less than the rear slenderness (S_{H}) of at least one of the fingers (14) arranged in the rear region (HB) of the cover (13), or than the rear slenderness (S_{H}) of at least 50% of all fingers (14) there or than the rear slenderness (S_{H}) of at least 80% of all fingers (14) there or than the rear slenderness (S_{H}) of all fingers (14) there.

2. Interdental cleaner according to claim 1, **characterized in that** the front slenderness (Sᵥ) is 3% to 15% less than the rear slenderness (S_{H}).

3. Interdental cleaner according to claim 2, **characterized in that** the front slenderness (Sᵥ) is 5% to 10% less than the rear slenderness (S_{H}).

4. Interdental cleaner according to one of claims 1 through 3, **characterized in that** the front slenderness (Sᵥ) is in the range of 3.0 to 5.0.

5. Interdental cleaner according to claim 4, **characterized in that** the front slenderness (Sᵥ) is in the range of 3.5 to 4.7.

6. Interdental cleaner according to one of claims 1 through 5, **characterized in that** the rear slenderness (S_{H}) is in the range of 3.5 to 5.5.

7. Interdental cleaner according to claim 6, **characterized in that** the rear slenderness (S_{H}) is in the range of 3.9 to 5.1.

8. Interdental cleaner according to one of claims 1 through 7, **characterized in that** the maximum diameter (dᵥ) in the base region of those fingers (14) arranged in the front region (VB) of the cover (13) is 5% to 15% less than the maximum diameter (d_{H}) in the base region of those fingers (14) arranged in the rear region (HB) of the cover (13).

9. Interdental cleaner according to one of claims 1 through 8, **characterized in that** the axial length (lᵥ) of those fingers (14) arranged in the front region (VB) of the cover (13) is 5% to 15% less than the axial length (l_{H}) of those fingers (14) arranged in the rear region (HB) of the cover (13).

## Revendications

1. Dispositif de nettoyage interdentaire (10) avec un support en forme de tige (11) fabriqué à partir d'une première matière plastique et comportant au niveau de sa zone d'extrémité une partie de manche (12) et dans sa zone d'extrémité avant opposée une zone de transition (13) fabriquée à partir d'une deuxième matière plastique souple et élastique ;
dans lequel plusieurs doigts saillants dans le plan radial (14) sont disposés sur le côté extérieur de la zone de transition (13), lesdits doigts étant reliés d'un seul tenant dans leur zone de pied avec la zone de transition (13) ;
dans lequel la zone de transition (13) comporte, au niveau de son extrémité avant du dispositif de nettoyage interdentaire opposée à la partie de manche (12), une région de pointe (SB) avec une longueur située dans la plage de 0,5 mm à 2,0 mm et de préférence dans la plage de 1,0 mm à 1,5 mm et une zone fonctionnelle (FB) raccordée à la zone de pointe (SB) en direction de la partie de manche (12) et s'étendant jusqu'à un doigt (14.1) arrière suivant directement la partie de manche (14) ;
dans lequel la zone fonctionnelle (FB) est subdivisée en une zone avant (VB) directement connexe à la zone de pointe (SB) avec une longueur située dans la plage de 1,0 mm à 2,5 mm et notamment dans la plage de 1,5 mm à 2,0 mm, une zone arrière (HB) s'étendant vers l'avant depuis le doigt (14.1) arrière avec une longueur située dans la plage de 1,0 mm à 2,5 mm et notamment dans la plage de 1,5 mm à 2,0 mm et une zone centrale (MB) disposée entre la zone avant (VB) et la zone arrière (HB) ;
dans lequel dans la zone avant (VB), au moins un des doigts (14) ou au moins 50 % de tous les doigts présents (14) ou au moins 80 % de tous les doigts présents (14) ou tous les doigts présents (14) présentent un élancement avant (S_{V}) d'au moins 3,0 ;
dans lequel dans la zone arrière (HB), au moins un des doigts (14) ou au moins 50 % de tous les doigts présents (14) ou au moins 80 % de tous les doigts présents (14) ou tous les doigts présents (14) présentent un élancement arrière (S_{H}) d'au moins 3,0 ; dans lequel l'élancement (Sᵢ) est obtenu à partir du quotient de la longueur axiale (1) du doigt (14) et de son diamètre maximal (d) dans la zone de pied (Sᵢ = l/d) ;
dans lequel l'élancement avant (S_{V}) d'au moins un des doigts (14) disposés dans la zone avant (VB) de la zone de transition (13) ou l'élancement avant (S_{V}) d'au moins 50 % de tous les doigts présents (14) ou l'élancement avant (S_{V}) d'au moins 80 % de tous les doigts présents (14) ou l'élancement avant (S_{V}) de tous les doigts présents (14) est plus réduit que l'élancement arrière (S_{H}) d'au moins un des doigts (14) disposés dans la zone arrière (HB) de la zone de transition (13) ou est comme l'élancement arrière (S_{H}) d'au moins 50 % de tous les doigts présents (14) ou comme l'élancement arrière (S_{H}) d'au moins 80 % de tous les doigts présents (14) ou comme l'élancement arrière (S_{H}) de tous les doigts présents (14).

2. Dispositif de nettoyage interdentaire selon la revendication 1, **caractérisé en ce que** l'élancement avant (S_{V}) est plus réduit de 3 % à 15 % par rapport à l'élancement arrière (S_{H}).

3. Dispositif de nettoyage interdentaire selon la revendication 2, **caractérisé en ce que** l'élancement avant (S_{V}) est plus réduit de 5 % à 10 % par rapport à l'élancement arrière (S_{H}).

4. Dispositif de nettoyage interdentaire selon l'une quelconque des revendications 1 à 3, **caractérisé en ce que** l'élancement avant (S_{V}) se situe dans la plage de 3,0 à 5,0.

5. Dispositif de nettoyage interdentaire selon la revendication 4, **caractérisé en ce que** l'élancement avant (S_{V}) se situe dans la plage de 3,5 à 4,7.

6. Dispositif de nettoyage interdentaire selon l'une quelconque des revendications 1 à 5, **caractérisé en ce que** l'élancement arrière (S_{H}) se situe dans la plage de 3,5 à 5,5.

7. Dispositif de nettoyage interdentaire selon la revendication 6, **caractérisé en ce que** l'élancement arrière (S_{H}) se situe dans la plage de 3,9 à 5,1.

8. Dispositif de nettoyage interdentaire selon l'une quelconque des revendications 1 à 7, **caractérisé en ce que** le diamètre maximal (d_{V}) dans la zone de pied des doigts (14) disposés dans la zone avant (VB) de la zone de transition (13) sont plus réduits de 5 % à 15 % par rapport au diamètre maximal (d_{H}) dans la zone de pied des doigts (14) disposés dans la zone arrière (HB) de la zone de transition (13).

9. Dispositif de nettoyage interdentaire selon l'une quelconque des revendications 1 à 8, **caractérisé en ce que** la longueur axiale (l_{V}) des doigts (14) disposés dans la zone avant (VB) de la zone de transition (13) sont plus réduits de 5 % à 15 % par rapport à la longueur axiale (l_{H}) des doigts (14) disposés dans la zone arrière (HB) de la zone de transition (13).
